Europäisches Patentamt

European Patent Office

Office européen des brevets

(19)

(11) **EP 0 668 594 B1**

(12) **EUROPEAN PATENT SPECIFICATION**

(45) Date of publication and mention
of the grant of the patent:
**22.08.2001 Bulletin 2001/34**

(51) Int Cl.[7]: **H01B 1/12**, C08G 73/02,
C08L 79/02

(21) Application number: **95101829.0**

(22) Date of filing: **10.02.1995**

(54) **Conducting plastic polymer and method of producing such material**

Leitfähiges Polymer und Verfahren zu seiner Herstellung

Polymère électro-conducteur et procédé pour sa préparation

(84) Designated Contracting States:
**BE CH DE FR GB LI NL**

(30) Priority: **10.02.1994 FI 940625**

(43) Date of publication of application:
**23.08.1995 Bulletin 1995/34**

(73) Proprietor: **NESTE OY**
**02150 Espoo (FI)**

(72) Inventors:
 • **Järvinen, Hannele**
  **SF-01280 Vantaa (FI)**
 • **Kärnä, Toivo**
  **SF-06400 Porvoo (FI)**
 • **Laakso, Jukka**
  **SF-00250 Helsinki (FI)**

 • **Levon, Kalle**
  **Brooklyn, N.Y. 11217 (US)**
 • **Ruohonen, Heikki**
  **SF-002700 Helsinki (FI)**
 • **Savolainen, Esko**
  **SF-15880 Hollola (FI)**

(74) Representative:
**Hansen, Bernd, Dr. Dipl.-Chem. et al**
**Hoffmann Eitle,**
**Patent- und Rechtsanwälte,**
**Arabellastrasse 4**
**81925 München (DE)**

(56) References cited:
**EP-A- 0 582 919**        **EP-A- 0 627 745**

**Description**

The present invention relates to a method of producing a conducting, melt-processible polyaniline composition which has an essentially neutral pH.

Currently, electrically conducting polymers are subjected to in-depth research worldwide. Such polymers offer the possibility of replacing metallic conductors and semiconducting materials in a plurality of applications including batteries, transducers, switches, photocells, circuit boards, heating elements, antistatic protection (against ESD) and electromagnetic protection (against EMI). Conducting polymers possess, i.a., the following advantages over metals: light weight, advantageous mechanical properties, good corrosion resistance and lower production and processing costs.

Conducting plastics can be roughly categorized into two different groups: filled conducting plastics in which a thermosetting or thermoplastic resin is made conductive by the addition of a conductive filler such as, e.g., carbon black or lampblack, carbon fiber, metal powder, etc., and intrinsically conducting plastics based on polymers made conductive by an oxidation, reduction or protonation (doping) process.

The electrical conductivity of filled conducting plastics is dependent on the content of conductive filler. However, a problem frequently encountered herein is that increasing the filler content and thereby the electrical conductivity, also the mechanical and certain chemical properties are degraded. Moreover, the electrical conductivity becomes difficult to control particularly at low conductivity levels.

Intrinsically conducting plastics can be produced from organic polymers blended with suitable doping agents, or dopants, which act as electron donors or acceptors. Then, the backbone chain of the polymer can be modified to contain holes and/or excess electrons that provide pathways to electric current along the conjugated chain.

Exemplifying kinds of intrinsically conducting polymers known in the art include polyacetylene, poly-p-phenylene, polypyrrole, polythiophene with its derivatives and polyaniline with its derivatives.

A technically and commercially promising intrinsically conducting polymer is particularly polyaniline and its derivatives. Polyaniline can occur in several different forms such as leucoemeraldine, protoemeraldine, emeraldine, nigraniline and toluprotoemeraldine.

According to the current convention, the emeraldine form of polyaniline called polyaniline EB (emeraldine base) is considered the most useful selection as the base material for conducting polymer compositions. This choice, however, requires a multistep process in which polyaniline is first in conjunction with the synthesis protonated with, e. g., sulfuric acid, and then the protonated polyaniline is neutralized with an aqueous solution of ammonia into polyaniline EB of the emeraldine form. The polyaniline EB thus obtained is protonated again with a protonic acid advantageously such as a sulfonic acid or a derivative thereof, particularly advantageously dodecylsulfonic acid (DBSA). As such, the product thus obtained is a viscous liquid or paste-like material which is difficult to handle due to its smearing and corrosive nature.

US Patent 5,232,631 discloses processible polyaniline compositions and blends that exhibit much lower percolation thresholds, sometimes even below 1 % w/w, of conductive polyaniline. The patent relates to conductive polymers and particularly to the use of functionalized protonic acids to induce processibility of electrically conductive polyanilines, and to induce solubility of electrically conductive polyanilines in organic liquids or fluid (melt) phases of solid polymers.

Patent publication EP 545,729 discloses a method of converting the conducting polyaniline produced in the above-described manner into an easy-to-process, melt-processible form by heat-treating the material with a sulfonic acid or a derivative thereof within a temperature range of approx. +40- +250 °C.

Polyaniline doped with a protonic acid has been found extremely useful when it has contained an excess of the protonic acid such as the above-mentioned sulfonic acid or a derivative thereof mixed in it, that is, in amounts sufficient not only for the doping of the mixture but also for the plasticization of the mixture. While plasticization makes the polymer composition melt-processible, its pH still remains acidic which causes problems such as corrosion in the manufacturing and processing machinery in which the material is treated.

Patent application EP 582,919 overcomes this acidity problem by disclosing a method of producing a conducting, melt-processible plastic polymer material having an approximately neutral pH. The method according to this publication provides a melt-processible, essentially neutral, readily processible, conducting polyaniline composition by adding a metal compound, advantageously zinc oxide and the doping/plasticizing protonic acid such as sulfonic acid or a derivative thereof, to the blend of polyaniline.

In EP-A-627 745 didoped polyaniline such as emeraldine polyaniline is used for preparing a conductive and plasticized composition. In the preparation process, the emeraldine polyaniline, a protonic acid for doping, a metal compound such as zinc oxide as a neutralization agent and an additional neutralizing compound such as a carbonate compound are mixed together. Similarly as in EP-A-582 919, the final product obtained is of more uniform acidity.

The methods disclosed in the above-cited publications employ in the polymerization step such a sulfuric-acid-protonated polyaniline which according to the methods is dedoped with an aqueous solution of ammonia into polyaniline of the emeraldine base (EB) form, and then this form is redoped and plasticized advantageously with sulfonic acid or a derivative thereof at an elevated temperature into a polyaniline composition. The change of the protonating acid causes that the first, removed acid results in process waste which must be treated in an appropriate manner. A further disadvantage of a multistep manufacturing method is that the probability of product defects increases with the increasing number of process steps. Moreover, problems may occur in the degree of homogeneity achievable in the latter doping step.

US patent publication 5,176,851 discloses a method of increasing the conductivity of doped polyaniline by means of heat-treating textile fibers coated with said polymer by direct polymerization of the aniline onto the surface of said fibers. According to the publication, conducting polyaniline is prepared by first performing the doping with a suitable thermally stable acid in conjunction with aniline polymerization. Alternatively, the doping is first performed in conjunction with polymerization with one acid which may be HCl, for instance, after which the product is dedoped and then redoped with another acid into conducting polyaniline. Thermally stable doping acids which can resist the heat treatment step are advantageously acids with a boiling point above 150°C including certain sulfonic acid derivatives and sulfuric acid. Alkylsulfonic acids such as DBSA are not cited in this publication. A conducting polymer suited for manufacturing into formed articles is not made by the method described in this publication.

US patent publication 5,171,478 discloses a method of increasing the viscosity, that is, the molecular weight of polyaniline, which may also be conducting, by means of heat treatment. The duration of the heat-treatment step may be shortened if the polyaniline contains a plasticizing agent such as water, lower alcohols, fluorinated carboxyl or sulfonic acids, ketones, and the like. According to this publication, conducting polyaniline can be made by first doping the polyaniline with a thermally unstable dopant and then replacing this dopant with a solution containing advantageously an excess amount of thermally stable dopant having, e.g., the form of $R_4(SO_3^-)_r$, where r = 1 - 8 and $R_3$ is most advantageously a substituted or unsubstituted phenyl or naphthyl group. The doping may also be carried out in conjunction with the polymerization step using, e.g., derivatives of sulfonic acid. However, the heat treatment according to this publication causes cross-linking which makes the doped, heat-treated, conducting polyaniline incompatible with further treatment by melt-processing methods.

US patent publication 5,281,363 discloses an electrically conductive polyaniline particle comprising a substituted or unsubstituted polyaniline doped with two or more dopants, at least one of said dopants predominating at or near the surface of said particles and at least one other dopant predominating at or near the core of said particle.

As is evident from the above-cited publications, the protonation of polyaniline can be performed according to conventional techniques directly in conjunction with the polymerization step, or alternatively, through a multistep doping-dedoping-redoping process. It must be noted that conducting, melt-processable and essentially neutral polyaniline has been made through the above-described multistep process only according to the prior art .

It is an object of the present invention to achieve a conducting, melt-processible, essentially neutral polyaniline composition.

It is a further object of the invention to produce said composition by a method which is simpler than prior-art methods.

It is still a further object of the invention to achieve a conducting polyaniline composition with a homogeneous dopant distribution.

It is another further object of the invention to achieve a conducting, essentially neutral, melt-processible polyaniline composition which is plasticized and has a layered structure readily verifiable by way of, e.g., its x-ray diffractogram.

It is still a further object of the invention to achieve a polyaniline composition which in addition to the above-mentioned properties exhibits a maximally high stability.

It is further another object of the invention to achieve a polyaniline composition which in addition to the above-mentioned properties is suited for blending with different types of matrix plastics to the end of manufacturing end products of desired kind.

It is still a further object of the invention to achieve a conducting polyaniline composition with the above-mentioned properties in which electrical conductivity is attained using a smaller amount of conducting polymer than is conventional in the prior art.

It is further another object of the invention to achieve a melt-processible, essentially neutral, conducting polyaniline composition through a process in which the acid used in the polymerization step forms no process waste, but rather, is incorporated in the product.

Unexpectedly, it has recently been found that these goals are attained in providing the method according to the features as recited in the characterizing part of claim 1.

The present invention provides a method of producing a conducting, melt-processible, essentially neutral polyaniline composition which is soluble in strong protonic acid wherein a salt obtained from the polymerization step of aniline in the presence of a protonating acid is plasticized by contacting the salt with a functionalized protonic acid which has a pK < 3 and a zinc compound which forms in combination a plasticizing agent.

Accordingly, the conducting polyaniline produced in the method according to the present invention is essentially neutral and is easily melt-processible owing to its layered structure which is readily verifiable. Moreover, the polymer produced has a stable structure. The simplified processing method according to the invention means that the doped polyaniline obtained from the polymerization step can be used as such in further processing steps. In other words, the protonated polyaniline from polymerization is directly usable without the need for conversion into the emeraldine form through ammoniacal wash and further redoping. Thus, two major process steps required in the prior art can be omitted. Hence, the possibilities of processing errors are reduced significantly. Moreover, the acid used as the first doping agent does not form undesirable process waste requiring appropriate neutralizing treatment, but rather, the first doping acid can be incorporated in the product itself. To those skilled in the art, however, it is obvious that the invention is not limited to doped polyaniline obtained directly from the polymerization step, but more broadly, the invention can be applied to polyaniline of similar form obtained from any other source.

In the method according to the present invention, polyaniline is synthesized using prior-art techniques in aqueous acid solution with ammoniumpersulfate acting as the oxidant; for details, refer to, e.g., Cao, Y., Andreatta, A., Heeger, A.J., and Smith, P., Polymer, 30(1989), December, p. 2305 or US patent 5,324,453.

The polymerizing and protonating acid can be broadly selected among a group of different acids comprising mineral acids such as sulfuric acid and organic acids including derivatives of sulfonic acid such as toluenesulfonic acid. In the production method according to the invention, the acid is most advantageously sulfuric acid, or alternatively, sulfuric acid containing a catalytic amount of DBSA acting as the plasticizing agent.

The product used which is obtained from the polymerization step is washed with water and lower alcohols to remove impurities, whereby the purpose of the washing step is to prevent detrimental postreactions.

The polyaniline obtained from the acidic polymerization process is in salt form. When the polymerizing acid is a mineral acid such as $H_2SO_4$, the polyaniline is obtained from the polymerization step in salt form corresponding to the acid. Such a salt-form polymer has been shown to possess a thermally stable structure (cf., e.g., Kulakarni, V. G., Campbell, L.D., and Mathew, W.R., Synthetic Metals, 30(1989), p. 323). Because the polymer must be subjected to, e.g., different drying and storing steps, polymer stability is obviously a highly desirable property.

The polyaniline salt thus synthesized and protonated is plasticized and solidified in a manner described in detail later in the text, conducting, essentially neutral polyaniline results exhibiting compatibility with further blending with matrix polymers and suitability for further processing in desired methods such as melt-processing with its variants also including solution-processing. The polyaniline produced according the invention has advantageously a readily verifiable layered structure. Namely, the melt-processibility of the conducting polyaniline composition according to the invention is particularly related to its layered structure.

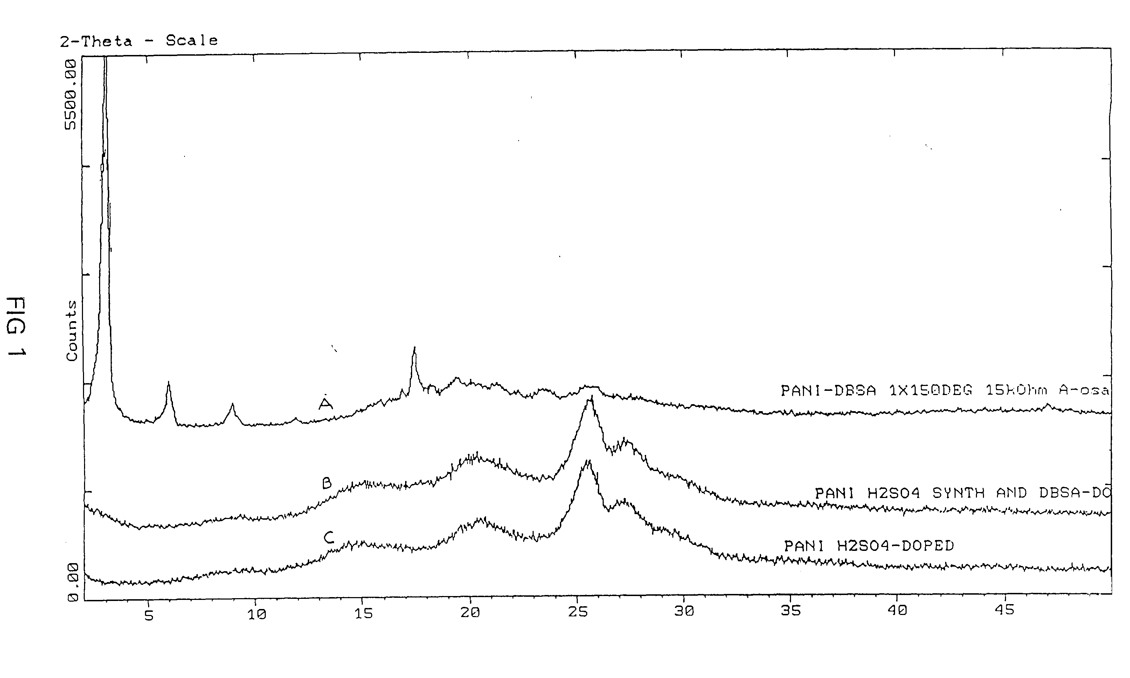

The function of the plasticizing agent is to prevent excessively tight packing of the polyaniline chains thus facilitating more relaxed moving of the chains relative to each other, that is, the plasticizing agent gives the polymer a layered structure. The unplasticized form of the polymer does not have such a layered structure, which is evident from the x-ray diffractogram shown in Fig. 1. The selection of the plasticizing agent also has a significant effect on the formation of the structured layer. The plasticizing agent must be able to form a complex composition with the polyaniline to be plasticized, and accordingly, have such a structure that can keep the polymer chains at a sufficiently distance from each other. Such a plasticizing agent may be a functionalized protonic acid containing, e.g., such a long alkyl chain or such a large molecule that can keep the polymer chains sufficiently apart from each other for improved melt-processibility. The reflection angles of the polymer layers can be measured from the x-ray diffractograms, and using known formulas, the mutual distances of the polymer chains and the size of the microcrystalline particles can be computed from the measured angles.

In the method according to the present invention, the plasticizing agent used is a functionalized protonic acid in combination with a zinc compound. In addition to its role as a plasticizing agent together with the functionalized protonic acid, the function of the zinc compound is to neutralize the polyaniline complex composition. In the polyaniline composition according to the invention, the plasticizing agent is a functionalized protonic acid selected from the group of Formula I or II below:

$$A\text{-}R \qquad\qquad\qquad (I)$$

$$A\text{ - }R_1 \qquad\qquad\qquad (II)$$

where

A is a sulfonic acid, selenic acid, phosphoric acid or carboxylic acid group, or a hydrogen sulfate, hydrogen selenate or hydrogen phosphate group;

R is an alkyl, alkenyl, alkoxy, alkanoyl, alkylthio or alkylthioalkyl group containing 1-20 carbon atoms;

or alternatively, an alkyl group substituted with at least one sulfonic acid, carboxylic acid, nitro, cyano or epoxy group or with a halogen atom; and

$R_1$ is a benzene ring substituted with an alkyl, alkenyl or alkoxy group containing 1-20 carbon atoms or with at least one carboxylic acid, nitro, cyano or epoxy group or with a halogen atom.

More advantageously the polyaniline complex composition produced according to the invention uses sulfonic acid containing an alkyl-substituted benzene ring together with zinc oxide as the plasticizing agent. Most advantageously dodecylbenzenesulfonic acid together with zinc oxide is used as the plasticizing agent.

A solidification/plasticization step carried out at an elevated temperature of approx. 40-300 °C, preferably at approx. 60-250 °C yields an easy-to-handle, essentially neutral, melt-processible, conducting polyaniline complex composition with a comb-like layered structure. The solidification/plasticization step can be carried out with the help of, e. g., screw mixer equipped with temperature control over the desired range.

In the present context, the term neutral refers to a pH range of 3.5 - 7, preferably of 4.5 - 6.5. Operation at a more acidic pH range would bring severe problems in, e.g., the use of equipment employed in the preparation and processing of the conducting polymer due to fretting and corrosion of the equipment. Moreover, a great number of conducting polymer applications presume neutral or almost neutral materials.

The conducting polyaniline complex composition prepared in the above-described manner may be further mixed with matrix polymers into a desired type of blend. The blend can be appropriately prepared using a conventional melt blending method. The matrix polymer can be any plastic conventionally used for this purpose. Illustrative of the matrix plastics are, e.g., homo- or copolymers based on olefin, styrene, vinyl or acryl polymers, or mixtures thereof, or thermoplastic condensation polymers. The most generally used matrix polymers include polyethylene, polypropylene, polyvinylchloride, styrenebutadienes, polystyrene, polyamides and polyesters. The proportion of the conducting polymer material in the blended plastic is attempted to be minimized for both technical and economical reasons. Accordingly, the content of the conducting polymer in the conducting plastic material can be approx. 1 - 50 wt-%, more advantageously 1 - 25 wt-% and most advantageously 5 - 15 wt-%. The weight percentages referred to herein concern a polyaniline complex composition plasticized with Zn-DBSA.

The preparation of the conducting polyaniline complex composition according to the present invention is based on polyaniline doped with an acid, advantageously a thermally stable acid such as toluenesulfonic acid or sulfuric acid. Most advantageously is used the salt-form polyaniline directly obtained from the polymerization step of aniline. The polymerization acid is advantageously a thermally stable acid . The polymerization acid is more advantageously sheap sulfuric acid, or moderate priced but thermally more stable toluenesulfonic acid and alternatively, the acid would contain a small amount of plasticizing agent.

The polyaniline salt thus obtained is mixed with the functionalized protonic acid and the zinc compound employed as the plasticizing agent. The functionalized acid used herein is closer defined in the foregoing text of this patent application and is more advantageously an alkylbenzenesulfonic acid and most advantageously dodecylbenzenesulfonic acid. The zinc compound is most advantageously zinc oxide. When desired, water may be added to the prepared mixture, after which the gelled product thus obtained is solidified/plasticized at an elevated temperature. Water addition permits lowering the plasticization temperature and offers improved control of the material behaviour. Water addition is closer described in EP patent publication 627 746 .

The solidification/plasticization step at the elevated temperature is advantageously carried out using, e.g., a screw mixer equipped with temperature control. Solidification/plasticization is performed within a temperature range of 40 - 300 °C, more advantageously of 60 - 250 °C. Water addition permits operation at the lower limits of these temperature ranges. Solidification/plasticization may be carried out in one or more steps depending on the size and type of the screw mixer and other factors. The plasticizing agent may be added in one batch, or alternatively, in smaller amounts between the different solidification/plasticization steps. In the end product of the conducting polyaniline complex composition the proportion of the doped polyaniline is 5 - 15 wt-%, the proportion of water added as an admixture is approx. 0 - 15 wt-%, and the proportion of the plasticizing agent is 95 - 70 wt-% when the weight percentages are computed for sulfuric acid doped polyaniline and the plasticizing agent is comprised of DBSA and ZnO. The end product is a plasticized, conducting, essentially neutral, melt-processible polyaniline complex composition which is ready for blending with a matrix plastic or plastics and for further processing in desired methods.

The invention is next described in greater detail with reference to the appended drawings and examples, in which

Figure 1 shows x-ray diffractograms measured for unplasticized and plasticized, sulfuric acid doped polyanilines;

Figure 2 shows x-ray diffractograms measured for sulfuric acid doped and DBSA plasticized polyaniline according to the invention and for toluenesulfonic acid doped polyaniline which is DBSA plasticized in conjunction with methanol wash; and

Figure 3 shows a microscopic picture of the surface of a blend comprising the polyaniline complex composition according to the invention and polyethylene used as the matrix plastic.

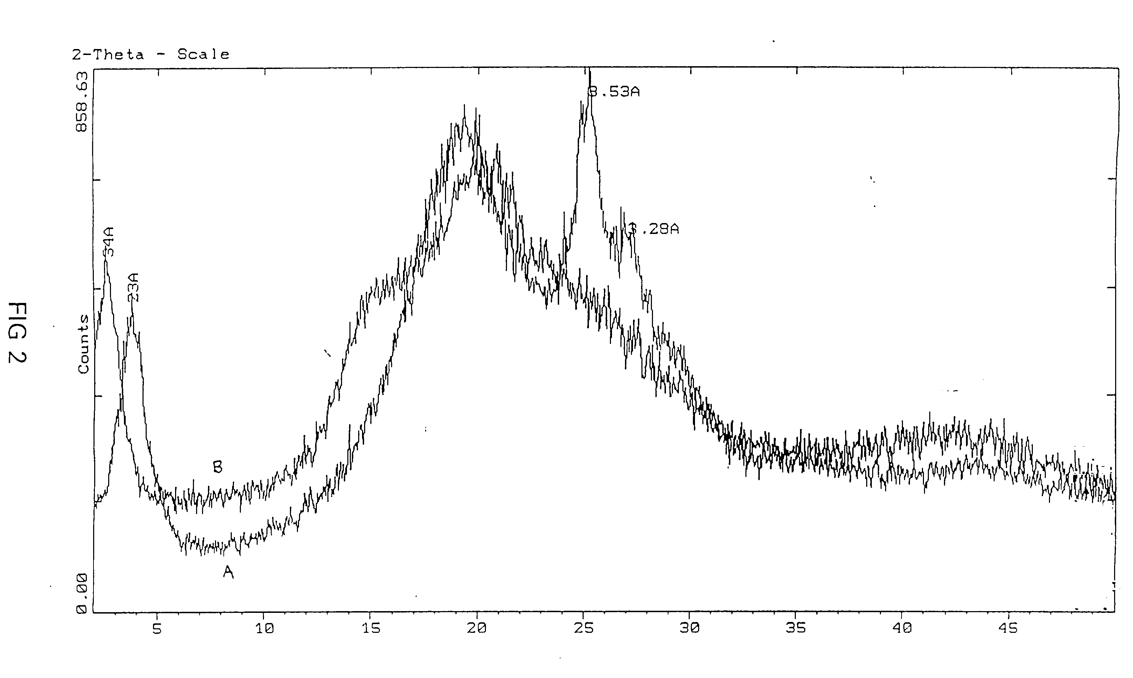

From the diffractograms shown in Figs. 1 and 2 (measured with Siemens D 500 X-Ray Diffractometer), the mutual distance of the polymer chains from each other and the size of the microcrystalline particles can be computed. The computations are based on Bragg's and Scherrer's laws. (For details, refer to, e.g., Harold P. Klug and Leroy E. Alexander, X-ray Diffraction Procedures for Polycrystalline and Amorphous Materials, John Wiley & Sons, Inc., New York 1974, pp. 90-91 and 656).

Bragg's law:

$$n\lambda = 2d\sin\theta$$

where

n = integer, order of reflection
$\lambda$ = wavelength of x-rays
$\theta$ = angle of reflection
d = distance to be measured

Scherrer's law:

$$L = K\lambda/ \beta_{1/2}\cos\theta$$

where

L = main dimension of crystal (crystal size)
K = constant equal to 0.94
$\beta_{1/2}$ = half-intensity angle in radians
$\lambda$ = wavelength of x-rays
$\theta$ = angle of reflection

In the present case the values are: n = 1, $\lambda$ = 1.54187 Å (x-ray wavelength filtered by a Cu tube used for the measurements), $\theta$ = angle recorded in the x-ray diffractogram (on the 2-theta scale) and $_{1/2}$ is measured as the half-intensity width of the peak.

With reference to Fig. 1, three x-ray diffractograms are shown in which:

-    Plot A represents the x-ray diffractogram of the sulfuric acid doped and DBSA/ZnO plasticized polyaniline according to the present invention prepared as described in Example 1. The start end of the 2-theta scale has a strong, high peak which corresponds to a distinct layered structure and from which using the above-written laws can be computed the mutual distance of the polymer chains as 29 Å and the crystal size as 273 Å. The other peaks of lower amplitude in the same x-ray diffractogram plot are reflection peaks.

-    Plot B represents the x-ray diffractogram of sulfuric acid doped polyaniline which is further protonated in an ethanol solution containing 0.5 mol of DBSA in molar proportion to the polyaniline. No layered structure can be detected. This indicates that no ion exchange occurs between $H_2SO_4$ and DBSA.

-    Plot C represents the x-ray diffractogram of sulfuric acid doped, unplasticized polyaniline. Again, no layered structure can be detected.

With reference to Fig. 2, plot A represents an x-ray diffractogram characterizing the crystalline structure of the sulfuric acid doped and DBSA/ZnO plasticized polyaniline according to the present invention (refer to Example 7). Plot B represents an x-ray diffractogram characterizing the crystalline structure of toluenesulfonic acid doped polyaniline which is DBSA plasticized in methanol (refer to Example 8). The x-ray diffractogram plots show that the polyaniline according to the present invention has an appreciably better plasticity (more amorphous structure) than the toluenesulfonic acid doped polyaniline. These materials were plasticized without using any ZnO in order to avoid a secondary peak representing the crystalline structure of the zinc compound.

**Example 1**

Toluenesulfonic acid doped polyaniline (VERSICON® ) was mixed with DBSA at room temperature. This acidic concept was neutralized by adding ZnO (DBSA:ZnO=2:1 mol/mol) resulting Zn-salt of DBSA. This neutralization reaction taked place at elevated temperature (=in an extruder, T>65 °C). Adding of DBSA to VERSICON® caused solidification/plasticization of the powder. The complex was ground before feeding to the extruder.
Following table shows the recepie:

| VERSICON® | 15.66 w-% |
|---|---|
| ZnO | 8.43 w-% |
| DBSA | 71.08 w-% |
| CaCO3 | 4.83 w-% |
| barrel temperatures | 150, 160, 170, 180, 200 °C |
| conductivity (melt pressed thin sheet) | 0.1 S/cm |

Mixing with different matrices resulted following particle free blends:

| MATRIX | GRADE | COMPLEX CONTENT w-% | CONDUCTIVITY S/cm |
|---|---|---|---|
| Polypropylene | SB 35 10 K | 10 | $10^{-5}$- $10^{-4}$ |
| Polyethylene | NCPE 2012 | 10 | $10^{-6}$-$10^{-5}$ |
| PCV | 4172/11B1 | 10 | $10^{-5}$-$10^{-4}$ |
| Polystyrene | SB 536 | 10 | $10^{-4}$-$10^{-3}$ |

**Example 2**

Plasticized complex was made according to the following complex: ZnO 10.09 w-%; DBSA 73.49 w-%; VERSICON® 16.43 w-%. Blending with different polymer matrices resulted blends shown in the table below:

| MATRIX | pH | COMPLEX CONTENT w-% | CONDUCTIVITY S/cm | AMOUNT OF Zn-SALT IN BLEND w-% |
|---|---|---|---|---|
| Polyethylene NCPE 2012 | 5.5 | 7 | $2.6\cdot10^{-6}$ | 6.4 |
| Polypropylene SB 35 10 K | 5.5 | 7 | $1.2\cdot10^{-4}$ | 6.4 |

**Example 3**

3.75 g (4.5 wt-%) of ZnO and 19.27 g (23.2 wt-%) of sulfuric acid protonated polyaniline were mechanically mixed together. 60 g (72.3 wt-%) of DBSA was added to the mixture with thorough mixing. Water was added (by 20 wt-% of the mixture weight). A gel was obtained which was solidified/plasticized in a screw mixer in two steps. The first solidification/plasticization was carried out at 150 °C, screw rotating at 200 rpm. The product obtained from this solidification/plasticization step was milled and mixed at 150 °C with a compound formed by DBSA and ZnO in a weight ratio of 60/40. The complementing solidification/plasticization step was carried out at 180 °C.
The complex composition thus formed had a pH of 4.2 (in 10 wt-% aqueous solution) and a conductivity of approx. 1 S/cm. The x-ray diffractogram (Fig. 1, x-ray diffractogram plot A) of the composition shows the layered structure caused by DBSA complex.

**Example 4**

The polyaniline composition prepared in Example 3 and a matrix plastic (polyethylene grade NCPE 3415 by Neste Oy) were mixed at 190 °C into a polymer blend containing:

| NCPE 3415 | 90 wt-% |
| polyaniline composition | 10 wt-%. |

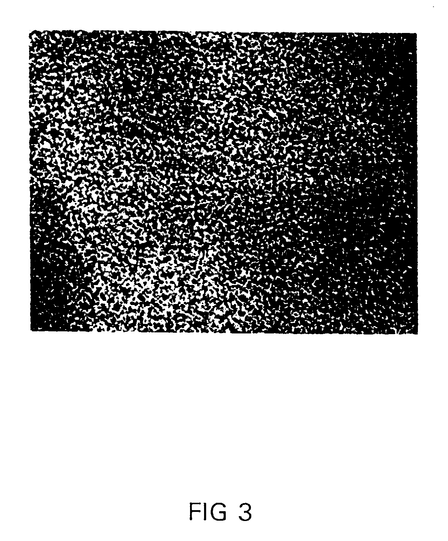

The polymer blend thus obtained had a conductivity of approx. $10^{-5}$ S/cm. Microscopic examination (Fig. 3) of the blend shows a structure with extremely fine dispersion which has a beneficial effect in film blowing, for instance. The pricks showing in the picture had a deep green colour and their number can be reduced by a stronger mixing of the blend.

**Example 5**

As in Example 4 was prepared a polymer blend containing polypropylene grade SB 35 10K by Neste Oy as the matrix plastic in the following proportion:

| SB 35 10K | 90 wt-% |
| polyaniline composition | 10 wt-%. |

The conductivity of the polymer blend thus obtained was approx. $10^{-3}$ S/cm.

**Example 6**

As in Example 3 was prepared a mixture containing 12.8 wt-% of polyaniline, 79.5 wt-% of DBSA and 7.8 wt-% of ZnO, into which mixture was added 15 wt-% of water and the mixture thus obtained was plasticized and solidified. The polyaniline used in this example was protonated in conjunction with the polymerization step with a mixture of sulfuric acid and DBSA. The mixing ratio $DBSA/H_2SO_4$ was 0.07 mol / 1 mol. After blending (in a proportion of 10 wt-% of the polyaniline) with polyethylene, a polymer blend was obtained exhibiting a conductivity of $8.3 \cdot 10^{-5}$ S/cm.

**Example 7**

A solidified/plasticized polyaniline complex composition according to the invention was prepared from polyaniline (in proportion of 50 mol-%) doped with sulfuric acid in conjunction with the polymerization step and from DBSA (in proportion of 50 mol-%) used as the plasticizing agent. With reference to Fig. 2, x-ray diffractogram plot A characterizes the crystalline structure of the composition thus obtained.

**Example 8**

In accordance with Example 3 of patent publication WO 92/18988, a polyaniline composition doped with p-toluenesulfonic acid in conjunction with the polymerization step, whereby the last methanol wash of said polyaniline was complemented with DBSA. Then, the molar ratio of p-toluenesulfonic acid to DBSA in the end product was 70/30. With reference to Fig. 2, x-ray diffractogram plot B shows the x-ray diffractogram of the product thus obtained.

**Claims**

1. A method of producing a conducting, melt-processible, essentially neutral polyaniline composition which is soluble in strong protonic acid characterized in that a salt obtained from the polymerization step of aniline in the presence of a protonating acid is plasticized by contacting the salt with a functionalized protonic acid which has $pK_a<3$ and a zinc compound which form in combination a plasticizing agent.

2. The method as defined in claim 1, characterized in that the protonating acid is a mineral acid.

3. The method as defined in claim 2, characterized in that the mineral acid is sulfuric acid.

**4.** The method as defined in claim 1, characterized in that the protonating acid is a sulfonic acid.

**5.** The method as defined in claim 4, characterized in that the sulfonic acid is p-toluene sulfonic acid.

**6.** The method according to claim 2 or 4, characterized in that in the aniline polymerization stage a salt-form of the polyaniline compound, corresponding to said acid, is formed.

**7.** The method as defined in claim 1, characterized in that the functionalized protonic acid is alkyl benzene sulfonic acid.

**8.** The method as defined in claim 7, characterized in that the alkyl benzene sulfonic acid is dodecyl benzene sulfonic acid.

**9.** The method as defined in any of the foregoing claims 1 to 8, characterized in that the plasticized polyaniline composition is solidified/plasticized by a heat treatment within a temperature range of 40 - 300°C.

**10.** The method as defined in claim 9 characterized in that the temperature range is 60 to 250°C.

**11.** The method as defined in claims 9 or 10, characterized in that said heat treatment is carried out in a screw mixer.

**12.** A use of a conducting, melt-processible, essentially neutral polyaniline composition produced according to any of the foregoing claims 1 to 11 as an electrically conducting component in applications of conducting plastics utilizing conventional plastics processing methods of polymer blends.

**Patentansprüche**

**1.** Verfahren zur Herstellung einer leitenden, schmelzverarbeitbaren, im wesentlichen neutralen Polyanilin-Zusammensetzung, die in einer starken Protonensäure löslich ist, dadurch gekennzeichnet, daß ein Salz, erhalten von dem Polymerisationsschritt eines Anilins in der Gegenwart einer protonierenden Säure durch Kontakt des Salzes mit einer funktionalisierten Protonensäure, die einen $pK_a<3$ hat, und einer ZinkVerbindung plastifiziert wird, die in Kombination ein Plastifiziermittel erzeugen.

**2.** Verfahren nach Anspruch 1, dadurch gekennzeichnet, daß die protonierende Säure eine Mineralsäure ist.

**3.** Verfahren nach Anspruch 2, dadurch gekennzeichnet, daß die Mineralsäure Schwefelsäure ist.

**4.** Verfahren nach Anspruch 1, dadurch gekennzeichnet, daß die protonierende Säure eine Sulfonsäure ist.

**5.** Verfahren nach Anspruch 4, dadurch gekennzeichnet, daß die Sulfonsäure p-Toluolsulfonsäure ist.

**6.** Verfahren nach Anspruch 2 oder 4, dadurch gekennzeichnet, daß bei der Anilin-Polymerisationsstufe eine Salzform der Polyanilin-Verbindung, die der Säure entspricht, gebildet wird.

**7.** Verfahren nach Anspruch 1, dadurch gekennzeichnet, daß die funktionalisierte Protonensäure Alkylbenzolsulfonsäure ist.

**8.** Verfahren nach Anspruch 7, dadurch gekennzeichnet, daß die Alkylbenzolsulfonsäure Dodecylbenzolsulfonsäure ist.

**9.** Verfahren nach einem der Ansprüche 1 bis 8, dadurch gekennzeichnet, daß die plastifizierte Polyanilin-Zusammensetzung durch eine Wärmebehandlung innerhalb eines Temperaturbereiches von 40 bis 300°C verfestigt/plastifiziert wird.

**10.** Verfahren nach Anspruch 9, dadurch gekennzeichnet, daß der Temperaturbereich 60 bis 250°C ist.

**11.** Verfahren nach den Ansprüchen 9 oder 10, dadurch gekennzeichnet, daß die Wärmebehandlung in einem Schraubenmischer durchgeführt wird.

**12.** Verwendung einer leitenden, schmelzverarbeitbaren, im wesentlichen neutralen Polyanilin-Zusammensetzung, erzeugt nach einem der Ansprüche 1 bis 11, als elektrisch leitende Komponente für Anwendungen von leitenden Kunststoffen unter Verwendung von konventionellen Kunststoffbearbeitungsverfahren von Kunststoffmischungen.

## Revendications

**1.** Procédé de production d'une composition de polyaniline essentiellement neutre, conductrice, pouvant être traitée par fusion, qui est soluble dans un acide protonique fort, caractérisé en ce qu'un sel obtenu à partir de l'étape de polymérisation de l'aniline en présence d'un acide fournisseur de protons est plastifié en mettant en contact le sel avec un acide protonique à fonctionnalité, qui a un $pK_a<3$, et un composé de zinc qui forment en combinaison un agent plastifiant.

**2.** Procédé suivant la revendication 1, caractérisé en ce que l'acide fournisseur de protons est un acide minéral.

**3.** Procédé suivant la revendication 2, caractérisé en ce que l'acide minéral est l'acide sulfurique.

**4.** Procédé suivant la revendication 1, caractérisé en ce que l'acide fournisseur de protons est un acide sulfonique.

**5.** Procédé suivant la revendication 4, caractérisé en ce que l'acide sulfonique est l'acide p-toluène sulfonique.

**6.** Procédé suivant la revendication 2 ou 4, caractérisé en ce que, dans l'étape de polymérisation de l'aniline, il se forme une forme saline du composé de polyaniline, correspondant audit acide.

**7.** Procédé suivant la revendication 1, caractérisé en ce que l'acide protonique à fonctionnalité est un acide alkyl benzène sulfonique.

**8.** Procédé suivant la revendication 7, caractérisé en ce que l'acide alkyl benzène sulfonique est l'acide dodécyl benzène sulfonique.

**9.** Procédé suivant l'une quelconque des revendications 1 à 8 qui précédent, caractérisé en ce que la composition de polyaniline plastifiée est solidifiée/plastifiée par un traitement thermique dans un intervalle de température de 40-300°C.

**10.** Procédé suivant la revendication 9 caractérisé en ce que l'intervalle de température est de 60 à 250°C.

**11.** Procédé suivant la revendication 9 ou 10, caractérisé en ce que ledit traitement thermique est réalisé dans un mélangeur à vis.

**12.** Utilisation d'une composition de polyaniline essentiellement neutre, conductrice, pouvant être traitée par fusion, produite suivant l'une quelconque des revendications 1 à 11 qui précèdent, comme composant conducteur de l'électricité dans des applications de plastiques conducteurs utilisant des procédés classiques de transformation de plastiques pour mélanges de polymères.

FIG 1

FIG 2

FIG 3